# EUROPEAN PATENT APPLICATION

(11) **EP 3 159 190 A1**
(43) Date of publication of application: **26.04.2017**
(21) Application number: 16188718.7
(22) Date of filing: 14.09.2016
(51) Int. Cl.: B60C 23/00, F16K 3/02, F16K 3/314, F16K 15/02, F16K 15/18, F16K 15/20, G05D 16/16

(54) **VALVE ARRANGEMENT**

(30) Priority: 21.10.2015 GB 201518683
(71) Applicant: AGCO International GmbH, 8212 Neuhausen am Rheinfall (CH)
(72) Inventor: STAEDELE, Alexander, 87616 Marktoberdorf (DE); Hoeldrich, Bernhard, 87616 Marktoberdorf (DE)
(74) Representative: AGCO Intellectual Property Department

(57) **Abstract**

A pilot controlled valve comprises an air inlet passage (3), an air outlet passage (2) and a slider (5). The slider (5) is moveable within a bore between a closed position and an open position in which the connection between the passages (2, 3) is closed and opened respectively. The slider is provided with a resilient member to bias said slider into the closed position. A part of the slider (5) registers with the bore to define a chamber within said bore, and the slider is provided with a discharge passage (15) which connects the chamber to the inlet passage (3) so that an increase in pressure in the chamber resulting from a leak can be released.

## Description

This invention relates to a pilot controlled valve. More specifically, this invention relates to a pilot controlled valve for controlling pressure adjustments of a tyre on a vehicle, or machine.

A valve for controlling the pressure of a tyre on an agricultural tractor is part of a tyre pressure control system (TPCS) found on a tractor as described for example in GB1315426.5. Such a system is operated by the vehicle air supply system by means of a compressor which supplies air to a number of consumers on the tractor, the TPCS being one of them.

It is necessary to frequently adjust the pressure of a tractor tyre as the tractor moves from field work to road work and vice versa. A pilot controlled tyre valve located on the tyre is used to control the inflation and deflation of the tyre. Air from the supply system is used to both inflate the tyre and operate the pilot control of the tyre valve. Such a valve is typically connected to the wheel, a supply line and a control line. The supply line supplies air for inflation of the tyre at high pressures (typically 7.5 - 8 bar) and the control line supplies air to the valve at a lower pressure (typically 4.5 - 5 bar) to enable the usage of cheaper components. The supply line is connectable to a supply passage inside the valve. The wheel is connectable to a wheel passage of the valve. A seal between the supply passage and wheel passage in the valve controls the flow of air between the two passages.

A known valve which may be used in such a system comprises a generally elongate slideable member provided with sealing means which can be brought into abutment with a part of the valve wall to seal and close the supply passage from the wheel passage. The slideable member is provided with a spring at one end which is located within a slider chamber of the valve. The slideable member is biased by the spring into a sealed position in which the sealing means abuts with a wall of the valve and provides a seal between the supply passage and the wheel passage.

To open the seal by moving the sealing means away from the valve wall, the control line must be pressurised with a force which overcomes the force exerted by the spring means. When the seal is open, air supplied to the supply passage can then flow through the wheel passage to the tyre and inflate the tyre. The seal is biased into a closed position when the force exerted by the pressure in the control line is less than the force exerted by the spring, that is, when the control line is no longer pressurised by the compressor.

Owing to the high pressures in the supply passage, there exists the problem that air can leak from the wheel passage into the slider chamber. This can result in the pressure in the slider chamber being greater than the pressure used in the control line. As a result, the pressure in the control line is not great enough to overcome the pressure in the slider chamber to open the sealing means. As a result, the valve becomes blocked and requires replacing or repairing.

It is an aim of the invention to provide a pilot controlled tyre valve which overcomes, or at least mitigates the problems mentioned above.

In accordance with the invention, there is provided a pilot controlled valve comprising an air inlet passage, an air outlet passage and a slider, said slider moveable within a bore of the valve between a closed position and an open position in which the connection between the inlet and outlet passages is closed and opened respectively, said slider provided with a resilient member to bias said slider into a closed position and wherein a part of said slider registers with the bore to define a chamber within said bore, and wherein said slider is provided with a discharge passage which connects the chamber to the inlet passage so that an increase in pressure in the chamber resulting from a leak can be released.

The invention provides a pressure relief means for air trapped in the bore of the valve and prevents the valve from malfunctioning.

The discharge passage preferably comprises a longitudinal passage extending along the longitudinal axis of the slider and at least one radial passage. Any air trapped in the chamber is free to flow through the discharge passage to the supply passage and thus prevent the valve blocking.

More preferably, the discharge passage is provided with a one way valve. A one way spring biased ball valve ensures that air is only conveyed from the chamber to the inlet passage.

Preferably, the resilient means is located within the chamber. The resilient means may be for example, a spring.

A control line pressure may be used to open the valve.

The valve is preferably a tyre valve for a vehicle, for example a tractor.

The inlet passage is preferably connected to an air supply from a tyre pressure control system (TPCS) of the vehicle where the outlet passage is connected to the tyre and the slider is moved by a control line pressure from the TPCS.

A leakage into the chamber is preferably detected by a pressure sensor located in the inlet passage. This way a driver can be warned if air from the tyre is leaking through the valve.

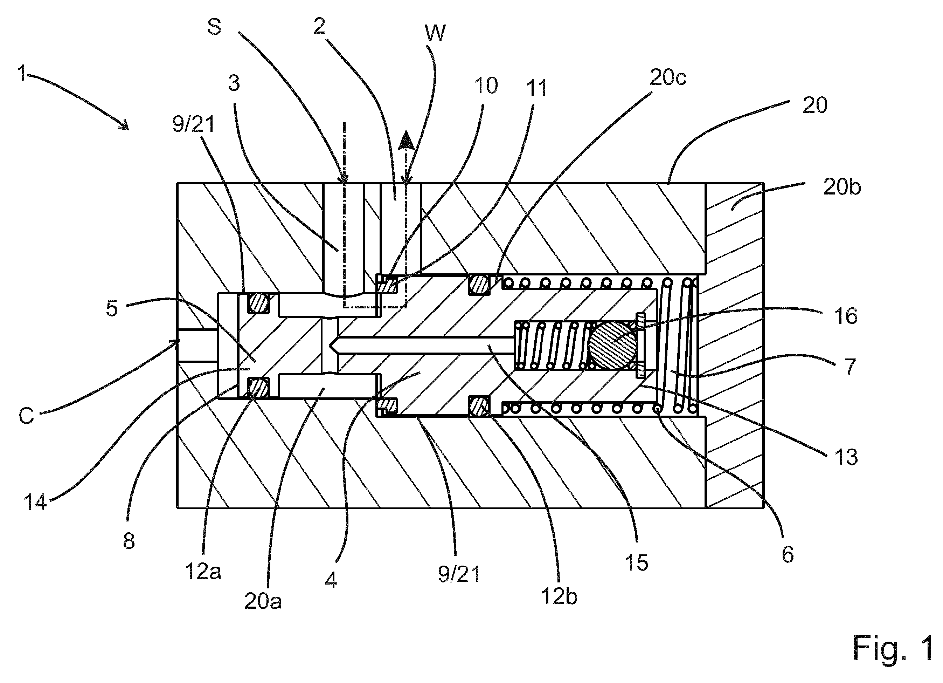

The invention will now be described, by way of example only, with reference to figure 1 which is a cross sectional view along the longitudinal axis of a valve in accordance with the invention.

Figure 1 shows a pilot controlled valve 1 of the type which can be used on vehicle, or machine wheels to control the inflation and deflation of a tyre. Such a valve would be suitable for use with a tyre of an agricultural tractor. In such cases, the valve 1 is mounted on the wheel and connected to an on board air supply system driven by a compressor, such as a tyre pressure control system (TPCS).

The valve 1 comprises a valve housing 20 having a wheel passage 2, a supply passage 3 and a bore 20a along which a slider 5 moves. Slider 5 is of a generally elongate form having two opposing ends 13, 14 and a varying diameter therebetween. A housing cover 20b provides access to the slider 5 at an end 13 of the slider. As shown in figure 1, bore 20a has two differing circumferences. The size of the bore towards end 14 of the slider 5 is smaller than the size of the bore towards the other end 13 of the slider 5.

Wheel passage 2 is connectable to a wheel W and a supply passage 3 which is connectable to an air supply line S of the TPCS. As disclosed in GB1315426.5, the supply line S may be provided with a pressure sensor to detect a leak in valve 1. Such a leak would be detected where, after valve 1 has been closed and supply line S is adjusted to a reference pressure such as atmospheric pressure, an increase in the pressure of supply line S is detected indicating that air from the tyre is leaking from the tyre through the valve and into the supply passage and supply line S.

A pilot control mechanism controls the flow of air from the supply passage 3 through to the wheel passage 2 and thus controls the inflation of the tyre. The pilot control mechanism 4 is connected to a control line C which is connected to the TPCS.

A notch 20c is provided on the slider between the two ends 13, 14. Notch 20c protrudes around the exterior of slider 5 and registers with a surface of bore 20a. A spring 6 is positioned around the exterior of the slider 5 which extends partly along the length of the slider from the notch 20c to an end 13 of the slider with the remainder of the spring being located within the bore 20a at the end 13 of the slider. The diameter of the slider 5 between the notch 20c and the end 13 of the slider is less than the diameter of the notch so that there is room for the spring 6 to fit within the bore 20a without it engaging with a surface of the bore. The notch 20c and housing cover 20b thus define a chamber 7 within the bore 20a in which the spring 6 is located.

The slider 5 is movably supported within bore 20a by cylindrical slide contours 9 which engage with mating surfaces 21 of the bore 20a to provide a loose fit.

The other end 14 of the slider 5 is provided with a surface 8 which comes into contact with air supplied through the control line C.

The slider 5 is provided with a shoulder 10 which is provided with sealing material 11, such as polytetrafluoroethylene (PTFE), or modified ethylenepropylene-diene elastomer (EPDM) for abutment with a part of the wall of the bore between the supply passage 3 and the wheel passage 2. This part of the wall is formed from the change in the diameter of the bore 20a.

Slider 5 is biased by spring 6 such that the sealing material 11 is urged into abutment with the bore wall and thus forms a seal between the supply and wheel passages 3, 2. Figure 1 shows the valve 1 in the closed position in which the supply passage 3 is sealed or blocked from the wheel passage 2. When inflation of the tyre is desired, control line C is pressurised by the TPCS. Air typically between 4.5 - 5 bar acts on surface 8 to move the slider in a direction which counteracts the force of the spring 6 so that the sealing material 11is moved away from the bore wall to thus connect the supply passage 3 with the wheel passage 2. The pressure exerted on the surface 8 through control line C provides a force on the slider 5 which must be greater than the force exerted by the spring on the slider in the opposite direction.

Air from the TPCS is then supplied to the supply passage 3 and flows through the wheel passage 2 and into the tyre as indicated by the broken line and arrows. When inflation is no longer required, the control line C is no longer pressurised and the force of the spring 6 moves the slider back into abutment with the bore wall so that the connection between the passages 2, 3 is sealed again. A similar procedure is applied for deflating.

Whenever air is guided through passages 2 and 3 for deflation or inflation, air leaks between a gap between the cylindrical slide contours 9 of slider 5 and mating surfaces 21 of valve housing 20. Simple seals may be provided, such as the slider seals 12a and 12b shown in figure 1. These seals sit in respective grooves on the exterior of slider and abut with the mating surfaces 21 of the bore 20a to provide a seal. However, such seals are not fully airtight and since the pressure in the supply passage 3 is high, (around 7.5-8 bar) it is possible for air to leak from the supply passage 3 into the chamber 7 through seal 12b and notch 20c. This can lead to valve 1 malfunctioning since the force applied by spring 6 and the additional force resulting from the pressure of leaked air in chamber 7 may be greater in one direction than the force which can be delivered through the control line C in the other direction. As a result, movement of the slider 8 may be prevented.

In accordance with the invention, slider 5 is provided with a discharge passage 15 which extends through the centre of the slider and fluidically connects the chamber 7 in the bore 20a to a part of the slider 5 located between the shoulder 10 and the other end 14 of the slider 5. Discharge passage 15 connects chamber 7 with supply passage S when the slider 5 is in a closed position. Since air in the supply passage 3 is discharged after each inflation/deflation process, any air trapped in the chamber 7 is free to flow through discharge passage 15 to the supply passage 3 and thus prevent the valve blocking. In this way it provides a pressure relief means for air trapped in the bore 20a.

As shown in figure 1, discharge passage 15 comprises a longitudinal passage extending partly along the longitudinal axis of the slider and two radial passages which each extend radially from the longitudinal axis where the slider 5 has its smallest diameter.

Discharge passage 15 may be provided with a one way spring biased ball valve 16 to prevent air flowing from the supply passage 3 into the chamber 7 which would result in a valve blockage (as the pressure in the chamber would be greater than the pressure delivered by the control line). One way spring biased ball valve 16 ensures that air is only conveyed from the chamber to the inlet passage 3.

The invention has the advantage that air (and therefore energy) is not wasted in that the air trapped in the chamber 7 is re routed and re used. It also has the advantage that a pressure sensor in the supply line S would still detect a leak in the valve 1 since a change in pressure in the supply line S after the valve has been sealed would indicate that air has leaked from the supply passage 3 into the chamber 7.

## Claims

1. A pilot controlled valve 1 comprising an air inlet passage 3, an air outlet passage 2 and a slider 5, said slider 5 moveable within a bore 20a between a closed position and an open position in which the connection between the passages 2, 3 is closed and opened respectively, said slider provided with a resilient member to bias said slider into the closed position and wherein a part of said slider 5 registers with the bore 20a to define a chamber 7 within said bore, and wherein said slider 5 is provided with a discharge passage 15 which connects the chamber 7 to the inlet passage 3 so that an increase in pressure in the chamber 7 resulting from a leak can be released, **characterised in that** the discharge passage 15 is provided with a one way valve 16 to prevent air flowing from the supply passage 3 into the chamber 7.

2. A pilot controlled valve 1 as claimed in claim 1 wherein the resilient means is located within the chamber.

3. A pilot controlled valve 1 as claimed in claim 1 or claim 2 wherein the discharge passage 15 comprises a longitudinal passage extending along the longitudinal axis of the slider 5 and at least one radial passage .

4. A pilot controlled valve 1 as claimed in any preceding claim wherein a control line pressure is used to open the valve 1.

5. A pilot controlled valve 1 as claimed in any preceding claim wherein said valve is a tyre valve for a vehicle.

6. A pilot controlled valve 1 as claimed in claim 5 wherein the inlet passage 3 is connected to an air supply from a tyre pressure control system (TPCS) of the vehicle, the outlet passage 2 is connected to the tyre and the slider 5 is moved by a control line pressure from the TPCS.

7. A pilot controlled valve as claimed in any preceding claim wherein a leakage into the chamber 7 can be detected by a pressure sensor located in the inlet passage 3.
